Europäisches Patentamt

European Patent Office

Office européen des brevets

(19)

(11) Numéro de publication : **0 343 043 B1**

(12) **FASCICULE DE BREVET EUROPEEN**

(45) Date de publication du fascicule du brevet :
16.10.91 Bulletin 91/42

(51) Int. Cl.$^5$ : **B23Q 3/18, B23Q 17/22, B24B 41/06**

(21) Numéro de dépôt : 89401308.5

(22) Date de dépôt : 11.05.89

(54) Procédé d'usinage de pignons arbrés par rectification des centres.

(30) Priorité : 17.05.88 FR 8806590

(43) Date de publication de la demande :
23.11.89 Bulletin 89/47

(45) Mention de la délivrance du brevet :
16.10.91 Bulletin 91/42

(84) Etats contractants désignés :
BE DE FR GB IT SE

(56) Documents cités :
DE-A- 2 242 738
DE-B- 1 290 843
PATENT ABSTRACTS OF JAPAN, vol. 10, n 134
(M-479) (2191), 17 mai 1986 & JP-A-60 259 337
(IROSHI TERAMACHI9 21-12-1985

(73) Titulaire : HISPANO-SUIZA Société anonyme
dite:
333, Bureaux de la Colline
F-92213 Saint Cloud (FR)

(72) Inventeur : Cattelain, Camille, Marcel
2, Impasse des Clos Milons
F-95130 Franconville (FR)
Inventeur : Girard, Françis
36, rue Edouard Branly
F-78220 Viroflay (FR)

(74) Mandataire : Moinat, François
S.N.E.C.M.A. Service des Brevets Boîte
Postale 81
F-91003 Evry Cédex (FR)

EP 0 343 043 B1

## Description

L'invention concerne un procédé d'usinage de pignons arbrés comportant une opération de reprise des chanfreins intérieurs d'extrémité, appelés centres, par rectification. Elle concerne également un outillage spécialement conçu pour la mise en oeuvre dudit procédé et destiné notamment à obtenir une matérialisation d'un axe de référence à déterminer en vue de la rectification des centres par rapport audit axe.

Dans le cycle de fabrication de pignons arbrés, notamment de type cylindriques et notamment destinés à des applications sur matériels aéronautiques imposant des critères sévères de précision et de qualité, à chaque extrémité de ces pièces, on ménage habituellement un chanfrein intérieur permettant la prise de pièces, dénommé centre. En cours de fabrication, avant les stades ultimes de finition, intervient habituellement une opération de traitement thermique qui entraîne des déformations et les défauts géométriques résultant au niveau d'une denture sont notamment qualifiés de saut et de voile, comme il sera précisé plus loin et comme cela est déjà bien connu d'un homme de métier. A ce stade, il devient par conséquent nécessaire d'effectuer sur les pignons arbrés une opération de reprise des centres avant de poursuivre les opérations de finition des pièces et notamment les rectifications des parties à cotes précises, portées de roulement, denture et cannelures. Cette opération de rectification des centres a donc pour but de définir pour le pignon arbré un axe de référence par rapport auquel doit être déterminée la géométrie desdites parties à cotes précises.

L'invention vise à obtenir, par les étapes préalables à ladite opération de rectification des centres dans le procédé d'usinage de pignons arbrés, une matérialisation de l'axe de référence du pignon. Ces résultats sont obtenus par un procédé d'usinage de pignons arbrés du type précité caractérisé en ce qu'il comporte les étapes préalables suivantes :

(a)     montage à chaque extrémité du pignon arbré d'un chemin de roulement, lesdits pignon arbré et chemin de roulement étant solidarisés au moyen d'un support de liaison ;

(b)     montage à l'intérieur du pignon équipé obtenu à l'issue de l'étape précédente (a) d'un mandrin à simblot, ledit pignon étant bloqué au moyen d'un système à écrou, contre-écrou et entretoise ;

(c)     une opération de centrage desdits chemins de roulement par rotation de l'ensemble obtenu à l'issue de l'étape précédente (b), placé entre pointes sur une machine, comportant une broche d'entraînement et des patins d'appui sur les chemins de roulement, l'excentration des chemins de roulement étant obtenue après escamotage desdits patins ;

(d)     démontage du mandrin et montage du pignon équipé des chemins de roulement sur une machine à rectifier les centres, de manière que l'axe de référence passe par les centres des deux chemins de roulement.

La mise en oeuvre dudit procédé d'usinage de pignons arbrés conforme à l'invention utilise un outillage spécialement conçu dans ce but comportant deux chemins de roulement destinés à être montés chacun à une extrémité du pignon arbré, chacun étant fixé sur un support, lui-même rendu solidaire du pignon au moyen d'un écrou de fixation muni d'ergots de blocage et un mandrin destiné à passer à l'intérieur dudit pignon arbré et portant un simblot destiné à coopérer avec une extrémité du pignon et bloqué au moyen d'une entretoise, d'un écrou et d'un contre-écrou vissés sur une extrémité du mandrin, à un niveau intermédiaire, une portée conique destinée à bloquer l'autre extrémité du pignon et à l'autre extrémité, une pièce d'entraînement destinée à coopérer avec le plateau d'extrémité de broche d'une machine.

D'autres caractéristiques et avantages de l'invention seront mieux compris à la lecture de la description qui va suivre d'un mode de réalisation de l'invention et en référence aux dessins annexés sur lesquels :

— la figure 1 représente une vue en coupe longitudinale par l'axe d'un pignon arbré constituant un exemple de pièce à laquelle s'applique le procédé d'usinage par rectification des centres conforme à l'invention ;

— la figure 2 représente le principe de définition d'un axe de référence d'un pignon arbré tel que représenté à la figure 1 ;

— les figures 3a à 3h illustrent des exemples de définition de l'axe de référence d'un pignon arbré avec une représentation symbolique des défauts géométriques mesurés et de leur correction ;

— la figure 4 représente une vue en coupe longitudinale d'un premier ensemble appartenant à un outillage de matérialisation de l'axe de référence d'un pignon arbré selon un mode de réalisation de l'invention ;

— la figure 4a représente, selon une vue analogue à celle de la figure 1, un pignon arbré équipé des éléments d'outillage représentés à la figure 4 ;

— la figure 5 représente une vue en coupe longitudinale d'un deuxième ensemble appartenant à l'outillage de mise en oeuvre du procédé d'usinage de pignons arbrés conforme à l'invention ;

— la figure 5a représente, selon une vue analogue à celles des figures 1 et 4a, le pignon arbré monté sur l'outillage de mise en oeuvre du procédé d'usinage conforme à l'invention ;

— les figures 6a et 6b représentent schématiquement le montage sur machine de l'ensemble représente à la figure 5a, lors de la réalisation conforme à l'invention de la matérialisation de l'axe de référence du pignon arbré.

— la figure 7 représente une vue schématique en coupe par un plan vertical du pignon arbré équipé selon la figure 4a et monté sur une machine à rectifier.

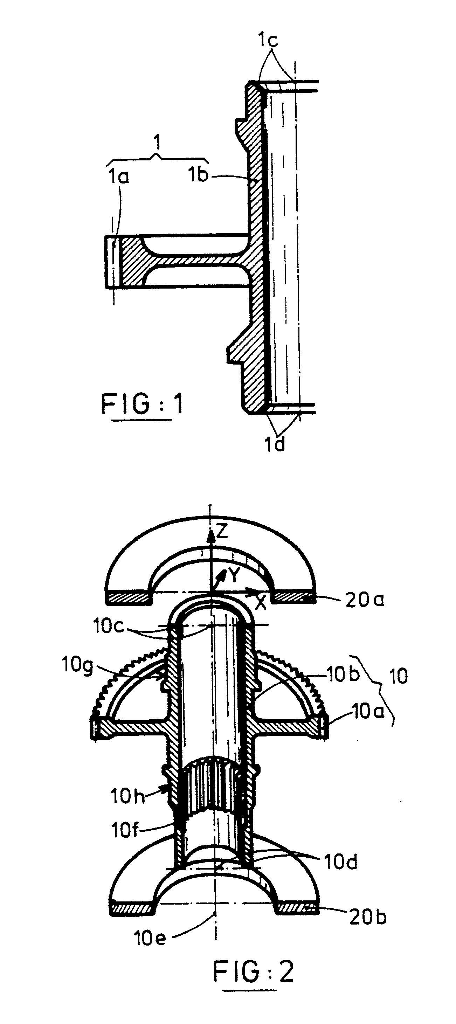

Un pignon cylindrique arbré 1 auquel s'applique le procédé d'usinage conforme à l'invention et représenté à la figure 1 comporte au moins une denture 1a et, de part et d'autre du pignon proprement dit, une partie arbrée creuse de forme générale cylindrique 1b. A chaque extrémité du pignon arbré 1 est ménagé un chanfrein annulaire intérieur, respectivement 1c et 1d. Ces chanfreins 1c et 1d constituent des surfaces d'appui sur outillages ou éléments de machine, permettant la prise de pièce, lors des opérations d'usinage et notamment de finition de la pièce et ils sont dénommés centres 1c et 1d. Un axe géométrique 1e passe par les deux centres 1c et 1d et constitue l'axe de référence lors des opérations de finition de la pièce.

La figure 2 montre le principe de matérialisation dudit axe de référence que l'invention réalise de manière remarquable. Dans le cas d'un pignon arbré 10 représenté à la figure 2 qui comporte, en plus de la denture 10a, partie arbrée 10b, chanfreins et centres 10c et 10d et axe géométrique 10e similaires au pignon 1 représenté à la figure 1, une rangée de cannelures intérieures 10f et deux portées cylindriques de roulement, respectivement 10g et 10h. Chaque extrémité du pignon arbré 10 est associée à un chemin de roulement, respectivement 20a et 20b, rendu solidaire du pignon. Chaque chemin de roulement est déplaçable dans un plan représenté par XY, correspondant au plan dudit chemin de roulement. Ces déplacements permettent, comme cela va être décrit de manière plus détaillée ci-après, de définir un axe de référence qui passe par les centres des deux chemins de roulement 20a et 20b.

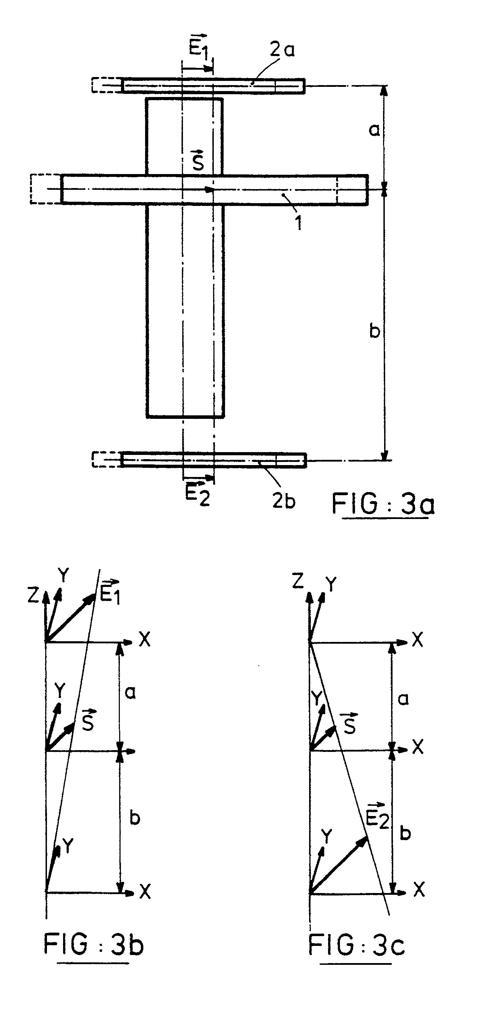

En effet, la détermination de l'axe de référence tient compte des défauts géométriques du pignon et on mesure ainsi, par tout moyen connu habituellement utilisé dans ce cas, le saut et le voile du pignon proprement dit ou de la denture. La figure 3a schématise ainsi le traitement d'un pignon sans cannelure 1 présentant un saut mesuré, représenté par un vecteur $\vec{S}$. La correction de l'axe de référence est obtenue par le déplacement des deux chemins de roulement 2a et 2b d'un vecteur $\vec{E_1}$ et $\vec{E_2}$.

Si a et b représentent les distances respectives entre les centres de denture et des chemins de roulement, les influences obtenues sont formalisées de la manière suivante, en référence aux représentations schématiques des figures 3a et 3b :

— l'effet d'un excentrement $\vec{E_1}$ sur le saut est :

$$\vec{S} = (1 - a/(a + b)) \vec{E_1}$$

— et celui d'un excentrement $\vec{E_2}$ :

$$\vec{S} = (a/(a + b)) \vec{E_2}$$

— l'effet conjugué des deux excentrements est :

$$\vec{S} = (1 - a/(a + b)) \vec{E_1} + (a/(a + b)) \vec{E_2}$$

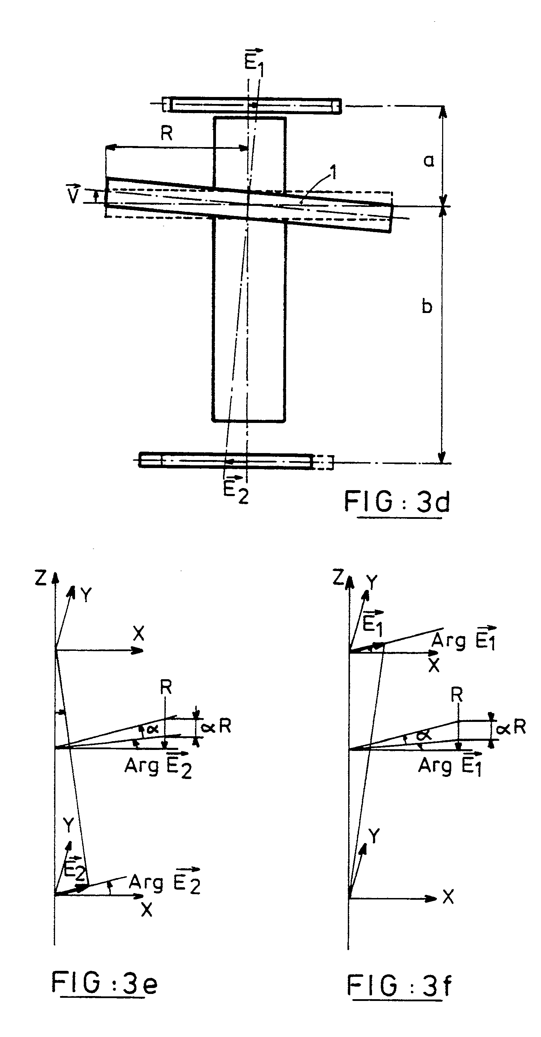

De même, la figure 3d schématise le traitement d'un pignon sans cannelure 1 présentant un voile mesuré, représenté par un vecteur $\vec{V}$. Un déplacement correcteur des chemins de roulement $\vec{E_1}$ et $\vec{E_2}$ est appliqué dans ce cas en fonction de $\vec{V}$, du rayon de denture R et des distances entre centres a, b.

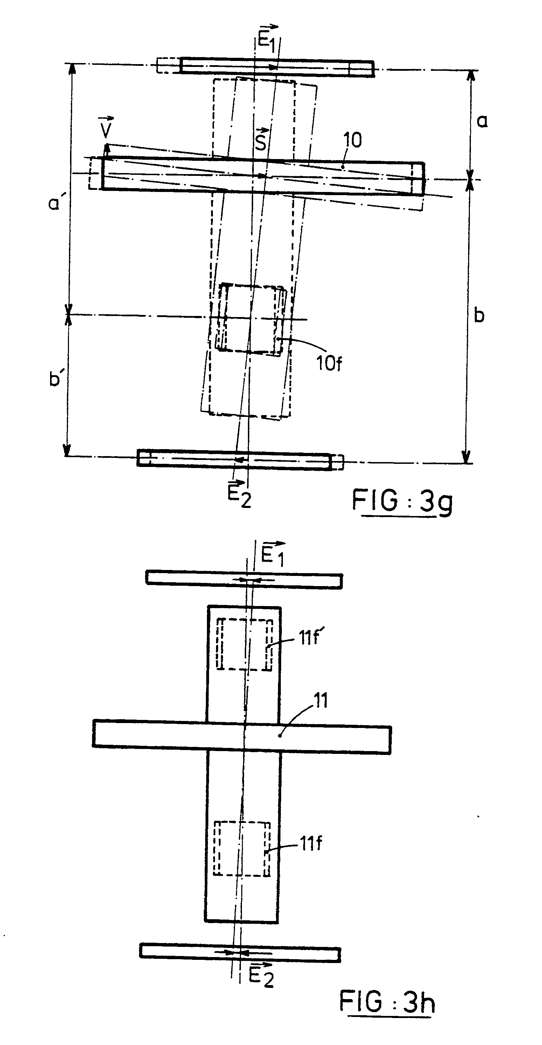

Les relations obtenues, en référence aux représentations schématisées respectivement sur les figures 3 et 3f, sont alors :

Si $\alpha$ est l'angle d'inclinaison du pignon $|\vec{V}| = R\alpha$ et pour un excentrement $\vec{E_2}$ :

$$\text{Arg } \vec{V} = \text{Arg } \vec{E_2} \cdot |\vec{E_2}| = \alpha (a + b)$$

ou $\vec{V} = (R/(a + b))) \vec{E_2}$
de même : $\vec{V} = (- R/(a + b)) \vec{E_1}$
et l'effet conjugué des deux excentrements est :

$$\vec{V} = (- R/(a + b) \vec{E_1} + (R/(a + b)) \vec{E_2}$$

Dans le cas, schématisé sur la figure 3g, où un pignon arbré 10 comporte une rangée de cannelures intérieures 10f, on impose en outre que l'axe de référence passe par le centre de la cannelure, a' et b' représentant les distances respectives entre centre de cannelure et centre des chemins de roulement. Le traitement thermochimique effectué sur le pignon prévoit en effet dans ce cas une faible épaisseur de cémentation des cannelures qui impose une rectification minimale. Les équations déterminant l'axe de référence deviennent dans ce cas :

$$\vec{S} = (b/(a + b)) \vec{E_1} + (a/(a + b)) \vec{E_2}$$
$$\vec{V} = (R/(a + b)) \vec{E_1} - (R/(a + b)) \vec{E_2}$$
$$\vec{S'} = (b'/(a' + b')) \vec{E_1} + (a'/(a' + b')) \vec{E_2}$$

La condition imposée implique : $|\vec{S'}| = 0$

Par suite, la réduction du saut d'origine peut entraîner une augmentation du voile d'origine et de même, une réduction du voile d'origine peut entraîner une augmentation du saut d'origine.

En posant a + b = a' + b'= c, le système d'équation devient :

$$|\vec{S} - (b/c) \vec{E_1} - (a/c) \vec{E_2}| < S_0$$
$$|\vec{V} - (R/c) \vec{E_1} - (R/c) \vec{E_2}| < V_0$$
$$(b'/c) \vec{E_1} + (a'/c) \vec{E_2} = 0$$

ou $\vec{E_2} = (- b'/a') \vec{E_1}$
et $|\vec{S} - \vec{E_1} ((b/c) - (ab'/ca'))| < So$
en posant : $K = (ba' - ab') / ca'$

$$|\vec{S} - \overrightarrow{KE_1}| < So$$

De même, $|\vec{V} - \vec{E_1} R/c (1 - b'/a')| < Vo$
et en posant : $L = (R/c) (1 - b'/a')$

$$|\vec{V} - \overrightarrow{LE_1}| < Vo$$

On écrit que la fonction $f (x_1, y_1)$ = carré du saut résiduel + $\lambda$ carré du voile résiduel est minimale.
Soit $f (x_1, y_1) = |\vec{S} - \overrightarrow{KE_1}|^2 + \lambda |\vec{V} - \overrightarrow{LE_1}|^2$
ou $f (x_1, y_1) = (x_s - Kx_1)^2 + (ys - ky_1)^2 + \lambda(x_v - Lx_1)^2 + \lambda(y_v - Ly_1)^2$

Un minimum est obtenu pour :

$$\partial f(x_1 y_1)/\partial x_1 = 0 \text{ et } \partial f(x_1, y_1)/\partial y_1 = 0$$

soit $\partial f/\partial x_1 = -2 K(x_s - Kx_1) - 2 L \lambda(x_v - Lx_1) = 0$
On en déduit : $x_1 = (Kx_s + \lambda Lx_v) / (K^2 + \lambda L^2)$
De même $\partial f/\partial y_1 = -2K (y_s - Ky_1) - 2L \lambda(yv - Ly_1) = 0$
On en déduit : $y_1 = (Kys + \lambda Lyv) / (K^2 + \lambda L^2)$
et $\vec{E_1} = (1/(K^2 + \lambda L^2) \times (K\vec{S} + L\vec{V})$
$\vec{E_2} = (- b'/a') (1/ (K_2 + \lambda L^2) \times (\overrightarrow{KS} + \lambda \overrightarrow{LV})$

Le coefficient $\lambda$ détermine l'importance du critère de voile par rapport à celui de saut. Ainsi pour $\lambda = 1$, le voile et le saut sont considérés de même importance et pour $\lambda = 0$, le voile est négligé.

Dans le cas d'un pignon tel que 11 représenté schématiquement sur la figure 3h et comportant deux rangées de cannelures intérieures, respectivement 11f et 11f', la définition de l'axe de référence reprend celle qui a été décrite auparavant pour un pignon sans cannelures, en référence aux figures 3a à 3f. Par contre, une excentration maximale reste imposée au niveau des cannelures en fonction de la surépaisseur de rectification admissible et l'excentration de l'axe de référence défini en tient compte.

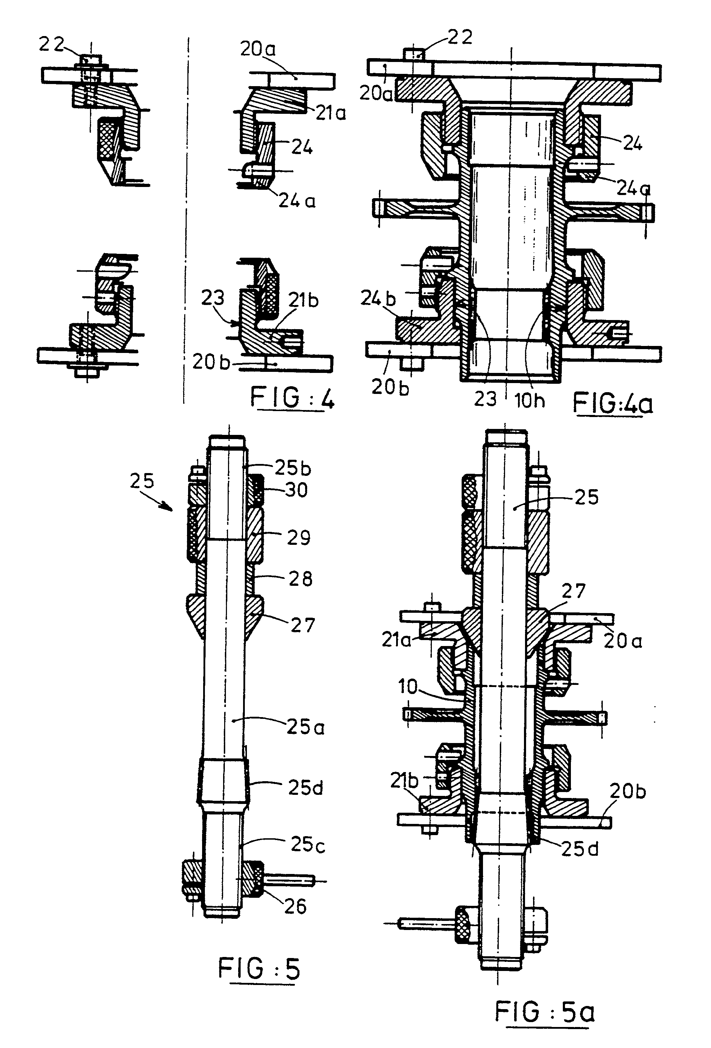

Un outillage réalisé conformément à l'invention en vue de matérialiser l'axe de référence permettant la reprise des centres selon la définition qui vient d'être décrite comporte deux ensembles respectivement représentés sur les figures 4 et 5. Le premier ensemble représenté à la figure 4 comporte deux chemins de roulement 20a et 20b. Chaque chemin tel que 20a ou 20b glisse sur un support de liaison 21a, 21b sur lequel il peut être bloqué au moyen de vis 22. La face interne 23 du support 21a ou 21b est susceptible de coopérer avec une portée cylindrique 10h ménagée sur le pignon arbré 10, lors du montage tel que représenté sur la figure 4a. La solidarisation avec le pignon arbré 10 est assurée au moyen d'un écrou 24 muni d'ergots 24a.

Le deuxième ensemble représenté à la figure 5 se compose d'un mandrin 25 comportant un arbre 25a portant à chaque extrémité une portée cylindrique filetée, respectivement 25b et 25c et une portée intermédiaire conique 25d sur laquelle sont ménagées des cannelures. A une extrémité de l'arbre 25a, une pièce d'entraînement 26 est vissée sur la partie filetée 25c et à l'autre extrémité sont montés un simblot 27, une entretoise 28 et sur la partie filetée 25b, sont vissés un écrou 29 et un contre-écrou 30. La figure 5a montre le pignon arbré 10 équipé des chemins de roulement 20a et 20b, tels que décrits précédemment en référence aux figures 4 et 4a et monté sur le mandrin 25 à simblot 27, tel que décrit ci-dessus en référence à la figure 5. Le simblot 27 bloque une extrémité du pignon arbré 10 tandis que l'autre extrémité du pignon est bloquée sur la portée conique 25d du mandrin 25.

Le procédé d'usinage de pignons arbrés conforme à l'invention comporte ainsi avant l'opération de rectification des centres les étapes préalables suivantes :

(a) les chemins de roulement 20a et 20b tels que décrits en référence à la figure 4 sont montrés sur le pignon arbré 10 pour obtenir le pignon équipé représenté à la figure 4a, dans lequel lesdits chemins de roulement 20a et 20b sont solidarisés audit pignon 10 ;

(b) le pignon équipé est alors monté sur le mandrin 25 à simblot 27 décrit en référence à la figure 5 pour obtenir le pignon équipé bloqué sur ledit mandrin 25 tel que représenté à la figure 5a ;

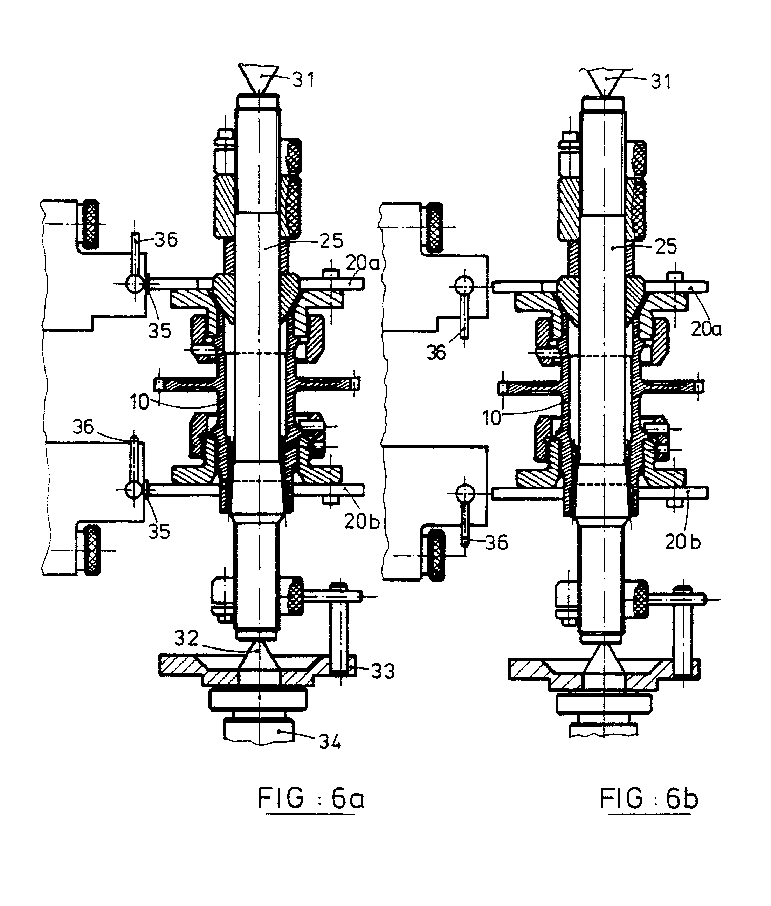

(c) l'ensemble obtenu est alors monté sur une machine suivant le principe schématiquement représenté sur les figures 6a et 6b.

Le mandrin 25 est monté entre pointes 31 et 32. La pointe 31 est associée à un plateau d'entraînement 33 qui coopère avec la pièce d'entraînement 26 du mandrin 25 et est solidaire d'une broche rotative 34 de la machine. La machine est également équipée de patins 35 escamotables, par exemple au moyen de leviers 36. Ces patins 35 sont susceptibles de coopérer avec les chemins de roulement. Par rotation du mandrin 25, on obtient le centrage des deux chemins de roulement 20a et 20b à l'aide des patins 35, tel que représenté sur la figure 6a. L'escamotage des patins tel que représenté sur la figure 6b permet la réalisation de l'excentration des chemins de roulement 20a et 20b, de manière à obtenir les corrections précédemment décrites en référence aux figures 3a à 3h.

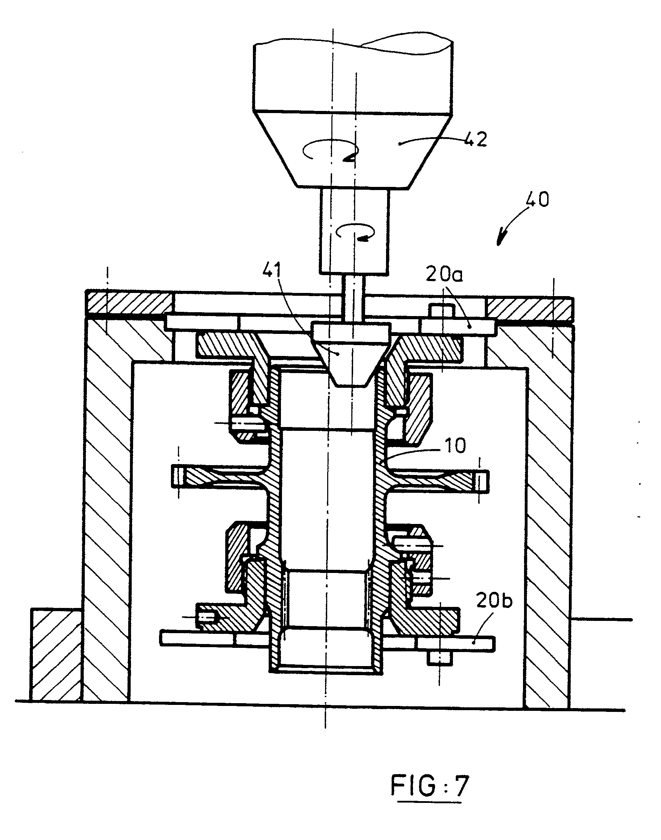

Une dernière étape avant la rectification des centres consiste alors à démonter le mandrin 25 et à monter sur une machine à rectifier 40 le pignon 10 équipé des chemins de roulement 20a et 20b matérialisant l'axe de référence qui passe pas les centres des deux chemins de roulement, comme représenté sur la figure 7. De manière connue en soi, l'opération proprement dite de rectification utilise une meule 41 entraînée par la broche 42 de la machine à rectifier 40. La meule 41 est animée d'un mouvement de rotation en même temps qu'elle suit un mouvement planétaire et un mouvement de translation suivant une rampe de trente degrés tandis que le pignon 10 équipé des deux chemins de roulement 20a et 20b est également animé d'un mouvement de rotation, en prenant l'axe du chemin de roulement en référence.

## Revendications

1. Procédé d'usinage de pignons arbrés comportant une opération de rectification des chanfreins intérieurs d'extrémité ou centres caractérisé en ce qu'il comporte les étapes préalables suivantes :

(a)     montage à chaque extrémité du pignon arbré (10) d'un chemin de roulement (20a, 20b), lesdits pignon arbré (10) et chemin de roulement (20a, 20b) étant solidarisés au moyen d'un support de liaison (21a, 21b) ;

(b)     montage à l'intérieur du pignon équipé obtenu à l'issue de l'étape précédente (a) d'un mandrin (25) à simblot (27), ledit pignon étant bloqué au moyen d'un système à écrou (29), contre-écrou (30) et entretoise (28) ;

(c)     une opération de centrage desdits chemins de roulement (20a, 20b) par rotation de l'ensemble obtenu à l'issue de l'étape précédente (b), placé entre pointes (31, 32) sur une machine comportant une broche d'entraînement (34) et des patins (35) d'appui sur les chemins de roulement (20a, 20b), l'excentration des chemins de roulement (20a, 20b) étant obtenue après escamotage desdits patins (35) ;

(d)     démontage du mandrin (25) et montage du pignon (10) équipé des chemins de roulement (20a, 20b) sur une machine à rectifier les centres, de manière que l'axe de référence passe par les centres des deux chemins de roulement.

2. Outillage de mise en oeuvre du procédé d'usinage de pignons arbrés par rectification des centres décrit à la revendication 1 comportant deux chemins de roulement (20a, 20b) destinés à être montés chacun à une extrémité du pignon arbré (10), chacun étant fixé sur un support (21a, 21b) lui-même rendu solidaire du pignon (10) au moyen d'un écrou de fixation (24) muni d'ergots (24a) de blocage et un mandrin (25) destiné à passer à l'intérieur dudit pignon arbré (10) et portant un simblot (27) destiné à coopérer avec une extrémité du pignon (10) et bloqué au moyen d'une entretoise (28) d'un écrou (29) et d'un contre-écrou (30) vissés sur une extrémité (25b) du mandrin (25), à un niveau intermédiaire, une portée conique (25d) destinée à bloquer l'autre extrémité du pignon (10) et à l'autre extrémité une pièce d'entraînement (26) destinée à coopérer avec le plateau (33) d'extrémité de broche (34) d'une machine.

## Claims

1. Process for machining shafted pinions comprising an operation of grinding the interior chamfers of the ends, or centres, characterised in that it comprises the following preliminary steps :

(a)     the fitting to each end of the shafted pinion (10) of a ball race (20a, 20b), the said shafted pinion (10) and ball race (20a, 20b) being firmly fixed by means of a supporting linkage (21a, 21b) ;

(b)     the mounting inside the modified pinion resulting from completing the preceding step (a) of a mandrel (25) with a centering device (27), the said pinion being secured by means of a nut (29), locknut (30) and spacer (28) ;

(c)     an operation of centering the said ball races (20a, 20b) by rotating the assembly obtained at the end of the preceding step (b) between the centres (31, 32) of a machine comprising a drive plate chuck (34) and pads (35) pressing against the ball races (20a, 20b), excentricity of the ball races (20a, 20b) being obtained after withdrawing the said pads (35) ;

(d)     dismantling the mandrel (25) and mounting the pinion (10) fitted with the ball races (20a, 20b) onto a centre grinding machine, in such a way that the reference axis passes through the centres of the two ball races.

2. Jig for implementing the process of machining shafted pinions by grinding the centres described in Claim 1 comprising two ball races (20a, 20b) each intended to be fitted to an end of the shafted pinion (10), each being fixed to a support (21a, 21b) itself firmly attached to the pinion (10) by means of a fixing screw (24) fitted with locking lugs (24a) and a mandrel (25) designed to pass through the inside of the said shafted pinion (10) and carrying a centering device (27) intended to work in conjunction with one end of the pinion (10) and secured by means of a spacer (28), a nut (29) and a locknut (30) screwed onto one end (25b) of the mandrel (25), at an intermediate point, a conical section (25d) designed to secure the other end of the pinion (10) and at the other end a drive arm (26) designed to operate in conjunction with the end plate (33) of the spindle (34) of a machine.

**Patentansprüche**

1. Verfahren zum Bearbeiten von Wellenritzeln, das einen Arbeitsgang umfaßt, bei dem innere stirnseitige Abfasungen oder Zentren gechliffen werden, **gekennzeichnet durch** die folgenden Vorbereitungsschritte :

(a)   Montieren jeweils eines Laufrings (20a, 20b) an jedem Ende des Wellenritzels (10), wobei Wellenritzel (10) und Laufring (20a, 20b) mittels eines Verbindungsträgerteils (21a, 21b) fest miteinander verbunden werden,

(b)   Montieren einer Spannzange (25) mit Spannkegel (27) im Inneren des in Schritt (a) gewonnenen bestückten Wellenritzels, wobei das Wellenritzel mittels eines aus Mutter (29), Gegenmutter (30) und Abstandshülse (28) bestehenden Systems eingespannt wird,

(c)   Zentrieren der Laufringe (20a, 20b) durch Drehen der in Schritt (b) gewonnenen Teilegruppe, die zwischen Spitzen (31, 32) einer Maschine angeordnet wird, die eine Antriebsspindel (34) sowie Gleitkufen (35) zum Abstützen an den Laufringen (20a, 20b) aufweist, wobeinach dem Versenken der Gleitkufen (35) die exzentrische Positionierung der Laufringe (20a, 20b) herbeigeführt wird,

(d)   Demontieren der Spannzange (25) und Montieren des mit den Laufringen (20a, 20b) bestückten Wellenritzels an einer Maschine zum Schleifen der Zentren derart, daß die Referenzachse durch die Zentren der beiden Laufringe verläuft

2. Werkzeugausrüstung für die Durchführung des in Anspruch 1 angegebenen Verfahrens zum Bearbeiten der Wellenritzel durch Schleifen der Zentren, mit zwei Laufringen (20a, 20b), von denen jeder an einem Ende des Wellenritzels (10) montierbar ist, die jeweils an einem Trägerteil (21a, 21b) befestigt sind, das seinerseits mittels einer mit Blockierstiften (24a) ausgestatteten Befestigungsmutter (24) mit dem Wellenritzel (10) fest verbunden ist, sowie mit einer Spannzange (25), die das Wellenritzel (10) durchdringen soll un einen Spannkegel (27) trägt, der mit einem Endbereich des Wellenritzels (10) zusammenwirken soll und mit Hilfe einer Abstandshülse (28), einer Mutter (29) und einer Gegenmutter (30) blockiert ist, die auf ein Ende (25b) der Spannzange (25) geschraubt sind, wobei die Spannzange (25) auf mittlerer Höhe eine konische Auflagefläche (25d) zum Blockieren des anderen Endbereich des Wellenritzels (10) trägt und an ihrem anderen Ende ein Mitnehmerteil (26) aufweist, das dazu bestimmt ist, mit einem am Ende der Spindel (34) einer Maschine angeordneten Teller (33) zusammenzuwirken.

FIG : 1

FIG : 2

FIG : 3a

FIG : 3b

FIG : 3c

FIG : 3d

FIG : 3e

FIG : 3f

FIG : 3g

FIG : 3h

FIG:4

FIG:4a

FIG:5

FIG:5a

FIG : 6a                FIG : 6b

FIG : 7